# EUROPEAN PATENT SPECIFICATION

(11) **EP 1 818 254 B1**
(45) Date of publication and mention of the grant of the patent: **15.02.2012**
(21) Application number: 06026224.3
(22) Date of filing: 18.12.2006
(51) Int. Cl.: B62M 9/12

(54) **Bicycle front derailleur**
Vorderer Kettenumwerfer für ein Fahrrad
Dérailleur avant pour bicyclette

(30) Priority: 01.02.2006 JP 2006024099
(43) Date of publication of application: 15.08.2007
(73) Proprietor: SHIMANO INC., Osaka 590-8577 (JP)
(72) Inventor: Ichida, Tadashi, Sakai-City Osaka 590-8577 (JP); Fujii, Kazuhiro, Sakai-City Osaka 590-8577 (JP); Oda, Yoshihiro, Sakai-City Osaka 590-8577 (JP)
(74) Representative: GROSSE SCHUMACHER KNAUER VON HIRSCHHAUSEN

(56) References cited:
- EP-A- 0 428 085
- EP-A- 1 602 572
- FR-A- 1 178 255
- JP-U- 59 031 594
- US-A- 4 551 121
- US-A- 4 573 950
- US-A- 4 734 083

## Description

### BACKGROUND OF THE INVENTION

### Field of the Invention

This invention generally relates to a bicycle front derailleur. More specifically, the present invention relates to a bicycle front derailleur that can be fastened to the frame of a bicycle.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle drive train.

Bicycles, and particularly sport type bicycles, use chain driven types of drive trains with externally mounted gearshift devices. Such externally mounted gearshift devices usually include a front transmission device and a rear transmission device. The front transmission device has a front chain wheel with two or three sprockets and a front derailleur. The rear transmission device has a multi-stage gear with seven to ten sprockets and a rear derailleur. In the front derailleur of this type of drive train, the front derailleur includes a fixed member that can be fastened to the frame of the bicycle, a chain guide that is free to move with respect to the fixed member, and a moving member that is used to move the chain guide (for example, see U.S. Patent No. 4,551,121, which is assigned to Shimano, Inc. or European patent application EP 1 602 572 A1). The chain guide has an inside member and an outside member which is disposed with a gap left between itself and the inside member, and which can guide a chain between itself and the inside member. In the front derailleur, the chain is passed between the inside member and the outside member, and the chain is guided to one of the sprockets by moving the chain guide toward or away from the frame. The EP 1 602 572 A1 discloses such a bicycle front derailleur according to the preamble of claim 1.

In such a front derailleur, in the case of downshifting in which the chain is guided from a sprocket on the large-diameter side to a sprocket on the small-diameter side, so-called chain dropping may occur in which the chain slips off and drops further to the inside without engaging with the sprocket on the small-diameter side. Even if chain dropping occurs, when a gearshift operation to the large-diameter side is performed, the chain may contact the rotating sprocket on the large-diameter side, and may catch on the sprocket on the large-diameter side, so that the chain dropping is eliminated. However, the probability of this is extremely low; ordinarily, when chain dropping occurs, the bicycle must be temporarily stopped, and the chain must be returned to the sprocket by hand. Accordingly, when chain dropping occurs during a bicycle race or the like, there is a danger that this will lead to a critical time loss.

In view of the above, it will be apparent to those skilled in the art from this disclosure that there exists a need for an improved bicycle front derailleur. This invention addresses this need in the art as well as other needs, which will become apparent to those skilled in the art from this disclosure.

### SUMMARY OF THE INVENTION

One object of the present invention is to provide a bicycle front derailleur that makes it easy to return the chain to the sprocket by an upshifting operation when chain dropping occurs during shifting of the bicycle front derailleur.

The foregoing objects can basically be attained by providing a bicycle front derailleur in accordance with claim 1 of the present invention that basically comprises a fixed member, a chain guide and a moving mechanism. The fixed member is configured and arranged to be fixedly attached to bicycle. The chain guide is configured to move between a retracted position and an extended position relative to the fixing base. The chain guide includes an inside member and an outside member defining a chain receiving slot to guide a chain, the inside member has a rear end with a protruding part disposed on a chain entry side of the chain receiving slot, and protruding towards the outside member. The moving mechanism is coupled between the fixed member and the chain guide to move the chain guide between the retracted position and the extended position. Furthermore, a bolt member connecting the inside and outside members at the chain entry side and a screw fastening part is formed on the rear part of the outside member and is bent into a C shape. This rear part of the outside member is disposed on the outside surface of the rear end part of the inside member and is connected and fastened to the inside member by the bolt member. A difference in level is formed in the rear end part of the inside member, the rear end part being connected with the inside surface of the screw fastening part of the outside member. Furthermore, a washer member is fastened to the inner plate by the bolt member. The washer member is arranged to fill the difference in level.

In this front derailleur, when the chain is passed between the inside member and outside member of the chain guide, a gearshift operation is performed, and when the chain guide is caused to move by the moving mechanism, the chain can be guided onto one of the plurality of sprockets. Furthermore, in cases in which chain dropping occurs in a gearshift operation from a sprocket on the large-diameter side to a sprocket on the small-diameter side, the chain moves to the first end of the chain guide. Since a first protruding part that protrudes toward the outside member is disposed on this first end, the gap between the chain and sprocket narrows when the chain moves toward the first end. When a gearshift operation of upshifting toward a sprocket on the large-diameter side is performed while treading on the pedals in this sate, the dropped chain is pressed toward the sprocket on the large-diameter side by the first protruding part. When the chain is pressed, the chain is clamped between the first protruding part and the side surface of the sprocket on the large-diameter side, so that the chain contacts the sprocket on the large-diameter side, and the chain is pulled in the direction of rotation by the rotating sprocket so that the chain tends to return to the sprocket. Here, since the first protruding part that protrudes toward the outside member is disposed on the first end of the inside member on the chain entry side where the chain is usually disposed when chain dropping occurs, in cases in which an upshifting operation is performed during chain dropping, the chain is caused to contact the sprocket by the first protruding part and to move while being clamped with the sprocket, so that the chain is readily returned to the sprocket.

According to a preferred embodiment, the inside member further has a first tapered part tapering gradually toward the first protruding part from a chain exit side of the chain receiving slot that is opposite from the chain entry side. In this case, when the chain moves toward the first end, the chain is smoothly guided by the first protruding part.

According to a preferred embodiment, the inside member has a chain shifting part extending from the chain entry side toward the chain exit side to provided for shifting of the chain. In this case, the chain which is ordinarily disposed between the first end and second end, and which is disposed in the chain path, is guided onto one of the plurality of sprockets by the chain guide.

According to a preferred embodiment, the inside member has a first edge part facing generally towards the chain entry side and a second edge part on a chain withdrawal side spaced from the chain entry side toward the chain exit side, and the first protruding part is at least partially disposed in an area of the chain entry side that is adjacent the second edge part. In this case, since the first protruding part is disposed on the side close to the large-diameter sprockets, the chain can be securely caused to contact the sprockets even though the first protruding part is disposed on a portion of the rear end of the inside member.

According to a preferred embodiment, the first protruding part protrudes toward the outside member in a range of one to two millimeters relative an adjacent part of the inside member. In this case, since the gap between the first protruding part and the sprocket on the small-diameter side is set in an appropriate range, the chain tends not to become locked in the gap even if the chain contacts the sprocket on the small-diameter side so that the chain is clamped between the first protruding part and the sprocket.

The inside and outside members are formed as a one-piece member with a bolt member connecting the inside and outside members at the chain entry side. In this case, since the structure of the front derailleur is simple, and the first end is connected by a bolt member, high rigidity can also be maintained while the chain is being guided.

The bicycle front derailleur further comprises a washer member fastened to the chain entry side by the bolt member, with the washer member being arranged to fill a difference in level between the first protruding part and a connecting part disposed between the inside and outside members. In this case, since the difference in level between the connecting part of the outside member and inside member and the first protruding part is filled by this washer member, the chain tends not to be caught even if a difference in level is generated as a result of the installation of the first protruding part.

According to a preferred embodiment, the first protruding part includes a spacer fastened by the bolt member. In this case, since the first protruding part is installed as a separate part from the inside member, the first protruding part can be added later to a derailleur having a conventional structure, and even if the first protruding part becomes worn as a result of contact with the chain, the first protruding part can be replaced.

According to a preferred embodiment, the inside member is a press-formed, metallic plate, with the first protruding part being a part of the press-formed, metallic plate that constitutes the inside member. In this case, since the inside member is formed by press-forming, the formation of the first protruding part is easy.

In the present invention, a first protruding part that protrudes toward the outside member is disposed on the first end on the chain entry side where the chain is commonly disposed when chain dropping occurs; accordingly, when an upshifting operation is performed in the case of chain dropping, the chain is clamped between the first protruding part and the sprocket, so that the rotation of the chain is utilized in order to facilitate the return of the chain to the sprocket.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
- Figure 1: is a right side elevational view of a bicycle equipped with a front derailleur in accordance with a first embodiment of the present invention;
- Figure 2: is a perspective view of the front derailleur in accordance with the first embodiment of the present invention;
- Figure 3: is a rear perspective view of the back surface of a chain guide in accordance with the first embodiment of the present invention;
- Figure 4: is an inside perspective view of the side surface of the chain guide that faces the bicycle frame in accordance with the first embodiment of the present invention;
- Figure 5: is a front elevational view of the chain guide in accordance with the first embodiment of the present invention;
- Figure 6: is a simplified, side elevational view showing a chain switching operation during downshifting using the chain guide of the first embodiment of the present invention;
- Figure 7: is a simplified, side elevational view showing a chain in the chain dropping state and in a chain returned state;
- Figure 8: is a perspective view, similar to Figure 2, of the front derailleur in accordance with a second embodiment of the present invention;
- Figure 9: is an inside perspective view, similar to Figure 4, of the side surface of the chain guide that faces the bicycle frame in accordance with a third embodiment of the present invention;
- Figure 10: is an enlarged, partial rear perspective view of a rear portion of the chain guide in accordance with a third embodiment of the present invention;
- Figure 11: is a top plan view of the rear part of a rear portion of the chain guide in accordance with a third embodiment of the present invention; and
- Figure 12: is a top plan view, similar to Figure 11, of a rear portion of a chain guide in accordance with a fourth embodiment of the present invention.

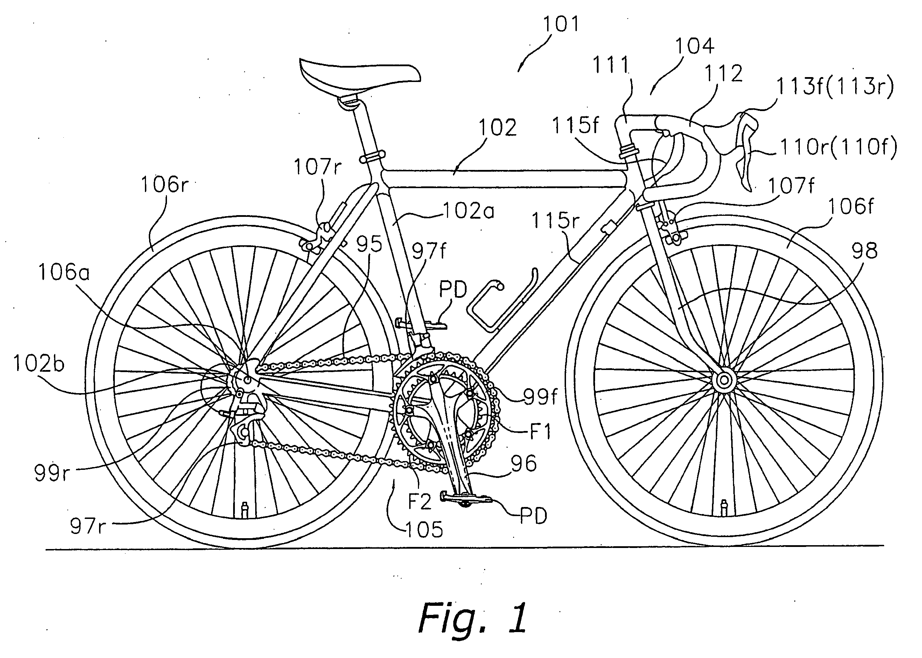

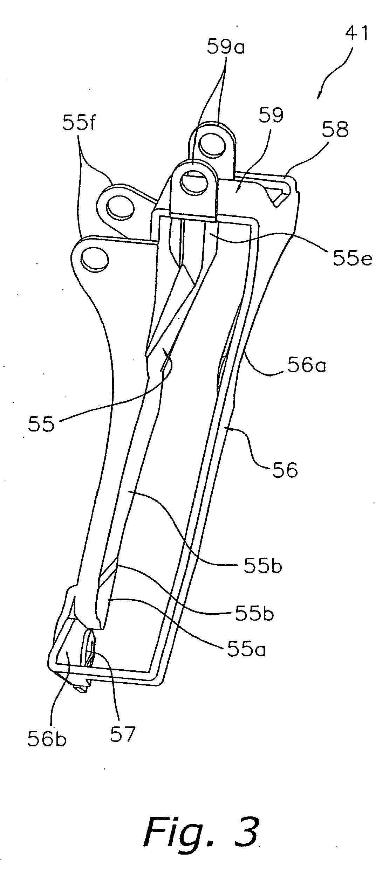

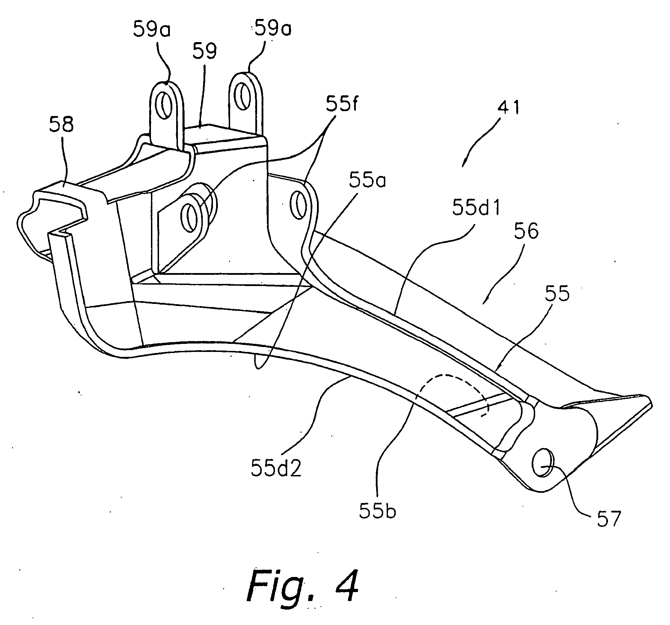

The embodiments of Fig. 1 to 8 and 12 do not form part of the claimed invention, but represent background art that is useful for understanding the invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

Referring initially to Figure 1, a bicycle 101 is illustrated in accordance with a first embodiment of the present invention. As seen in Figure 1, the bicycle 101 is a "road racer" (racing style road bike) that basically comprises a diamond shaped frame 102, a handlebar unit 104, a drive unit 105, a pair of front and rear wheels 106f and 106r, a pair of front and rear brake devices 107f and 107r and a pair of variable speed gearshift devices or transmission operating devices 110f and 110r. The diamond shaped frame 102 has a front fork 98 to which the handlebar unit 104 is fastened. The drive unit 105 basically includes a chain 95, a crank 96 with a pair of pedals PD, a pair of front and rear derailleurs 97f and 97r, a pair of front and rear sprocket sets 99f and 99r, and other conventional components. The front and rear wheels 106f and 106r are installed on the front fork 98 and the rear side of the frame 102, respectively, as seen in Figure 1. The speed gearshift devices or transmission operating devices 110f and 110r are operatively coupled to the front and rear derailleurs 97f and 97r by transmission cables 115f and 115r for operating the front and rear derailleurs 97f and 97r.

As seen in Figure 1, the handlebar unit 104 includes a handlebar stem 111, and a handlebar 112 fixedly coupled to the upper end of the handlebar stem 111. The handlebar stem 111 is fixedly coupled to an upper end of the front fork 98. The handlebar 112 is a drop handle type handlebar equipped with left and right brake levers 113f and 113r for operating the front and rear brake devices 107f and 107r, respectively. The brake lever 113f is disposed at the right end part of the handlebar 112, and the brake lever 113r is disposed at the left end part when the bicycle 101 is viewed from behind. In the illustrated embodiment, the transmission operating parts 110f and 110r are provided on the brake levers 113f and 113r. The transmission operating parts 110f and 110r are connected to the front and rear derailleurs 97f and 97r via the transmission cables 115f and 115r.

The front derailleur 97f is provided on a seat tube 102a of the frame 102, and guides the chain 95 so as to position the chain at one of two shift positions via the transmission operating part 110f. The rear derailleur 97r is provided on the rear hook part 102b of the frame 102, and guides the chain 95 so as to position the chain at one of ten shift positions via the transmission operating part 110r.

The front sprocket group 99f has two sprockets F1 and F2, which have different numbers of gear teeth, arranged in the axial direction of the crank shaft. The rear sprocket group 99r has ten sprockets, which have different numbers of gear teeth, arranged in the axial direction along a hub shaft 106a of the rear wheel. In the front sprocket group 99f, the inside sprocket F1 has fewer gear teeth than the outside sprocket F2. Furthermore, in the rear sprocket group 99r, the sprockets have fewer gear teeth sequentially from the innermost side, and the top outermost sprocket has the fewest gear teeth. The front and rear derailleurs 97f and 97r move the chain 95 to any among the plurality of sprockets to accomplish the gear shifting operation. The gear shifting operation is accomplished by the transmission operation parts 110f and 110r using the brake levers 113f and 113r.

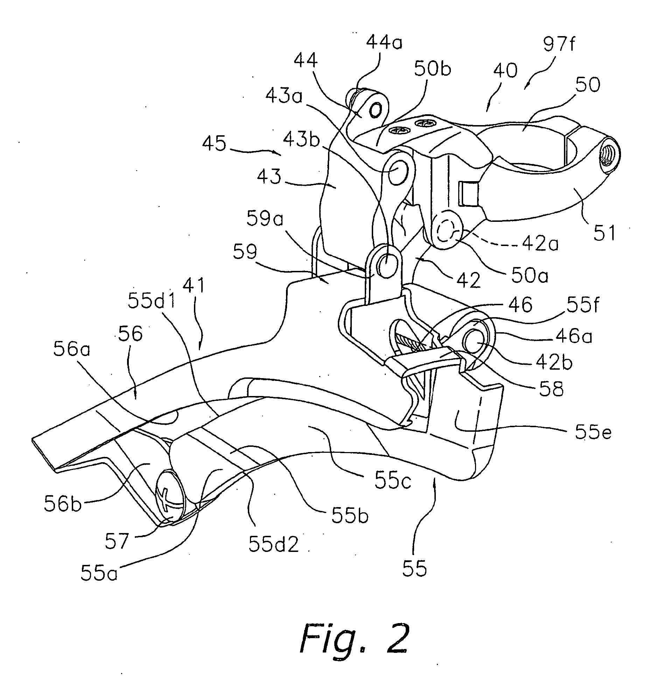

As shown in Figure 2, the front derailleur 97f is a downswing-type derailleur. The front derailleur 97f basically has a base or fixed member 40, a chain guide 41, an inner link 42 and an outer link 43. The inner and outer links 42 and 43 are disposed parallel to each other and pivotally connected between the fixed member 40 and the chain guide 41 to form a chain guide moving mechanism 45. The fixed member 40 is fixedly mounted on the seat tube 102a. The chain guide 41 is configured to move between a retracted position and an extended position relative to the fixing member 40 by the chain guide moving mechanism 45. In particular, the inner and outer links 42 and 43 are pivotally coupled at their inner ends to the fixed member 40 and pivotally coupled at their outer ends to the chain guide 41. The inner link 42 and the outer link 43 are arranged so as to be parallel to each other. Thus, the inner and outer links 42 and 43 form a four bar linkage assembly with the fixing member 40 and the chain guide 42 in order to move the chain guide 41 between the retracted position and the extended position.

The fixed member 40 has a first base bracket or clamping member 50 and a second base bracket or clamping member 51. The first and second clamping members 50 and 51 are pivotally coupled together so as to be capable of opening and closing, and enclose the seat tube 102a therebetween. The first clamping member 50 is provided with a pair of inner link supports 50a to pivotally mount the inner link 42 via a link shaft 42a. Furthermore, the first clamping member 50 is provided with an outer link support 50b that is disposed above the inner link supports 50a to pivotally mount the outer link 43 to the first clamping member 50 via a link shaft 43a.

In the present embodiment, the chain guide 41 has an inner plate 55 and an outer plate 56 defining a chain receiving slot therebetween. The chain 95 can be guided between these inner and outer plates 55 and 56. The inner plate 55 constitutes one example of an inside member in accordance with the present invention, while the outer plate 56 constitutes one example of an outside member. Thus, the outer plate 56 is disposed to the outside of the inner plate 55 relative to the fixing member 40. The chain guide 41 guides the chain 95 to either of the two sprockets F1 and F2 by moving between two shift positions that include a low shift position disposed over the small diameter or inside sprocket F1, and a top shift position disposed over the large diameter or outside sprocket F2. The chain guide 41 is connected to the outer ends of the inner link 42 and the outer link 43 so as to move between the retracted position and the extended position relative to the fixing member 40.

In the present embodiment, the inner and outer plates 55 and 56 by cutting a thin piece of sheet metal into a specified shape on a press, and then bending the sheet metal. Accordingly, in the present embodiment, both the inner and outer plates 55 and 56 are integrally formed as a one-piece, unitary member from a single metallic sheet material that is bent to form a chain cage with the chain receiving slot. In particular, the rear ends of the inner and outer plates 55 and 56 are linked together at by a connecting bolt 57 at one location at the back part, while the inner and outer plates 55 and 56 are integrally linked together at the front end by a piece of by the metallic sheet material. In particular, the inner and outer plates 55 and 56 are integrally connected in a C-shaped bend at the top part by a front connecting part 58 and a back connecting part 59. The back connecting part 59 has a pair of outer link connecting parts 59a extending upwardly. The outer end of the outer link 43 is pivotally connected to the outer link connecting part 59a via a link shaft 43b. The rear ends of the inner and outer plates 55 and 56 constitute one example of a first end side on the chain entry side.

The inner plate 55 is provided with a pair of inner link connecting parts 55f on its back surface. The inner end of the inner link 42 is pivotally connected to the inner link connecting parts 55f via a link shaft 42b. A torsion spring 46 is disposed on the outer circumference of the link shaft 42 as a force exerting member that normally urges the chain guide 41 to the low shift position. The torsion coil spring 46 is covered by a synthetic resin spring cover, and one end of the spring is attached to the inner plate 55, while the other end is attached to the inner link 42.

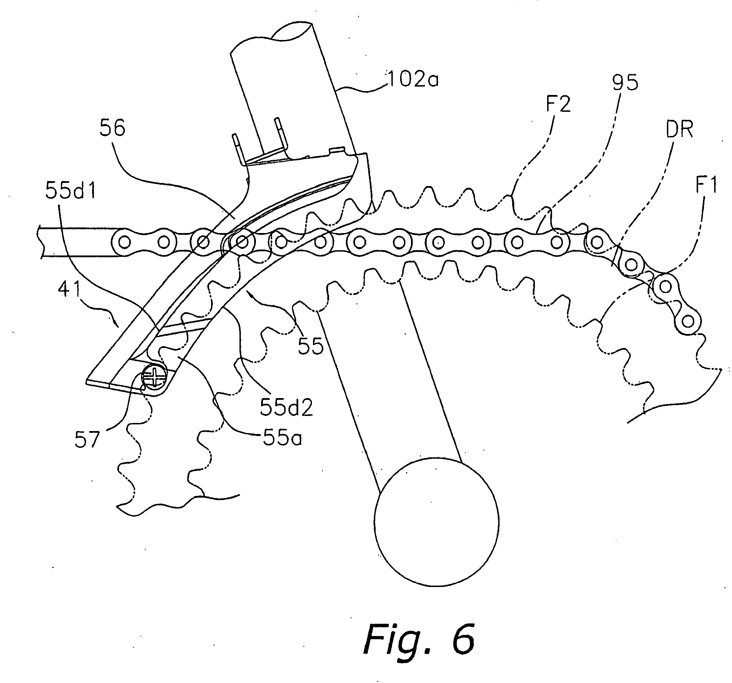

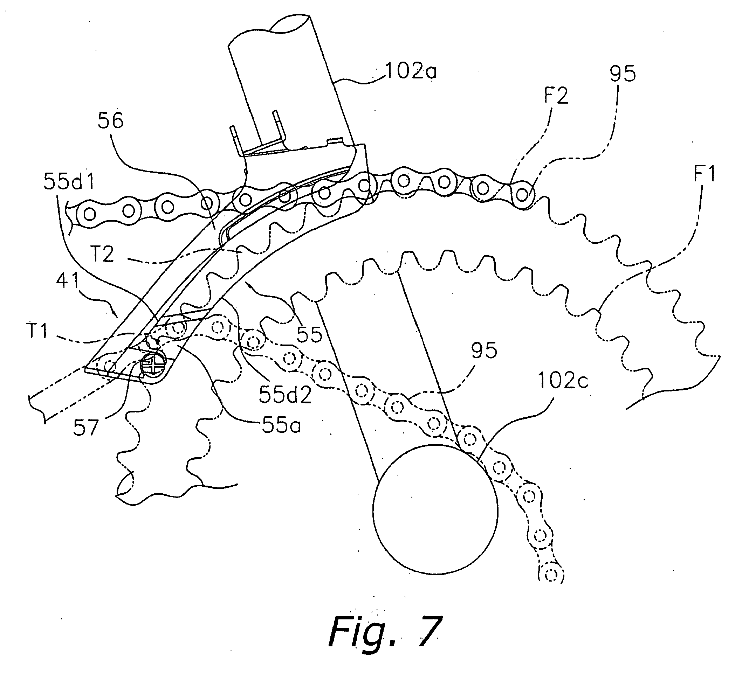

Furthermore, from the rear end toward the front end, the inner plate 55 has an upper side edge 55d1 on the chain entry side, and a lower side edge 55d2 on the chain exit side. The rearward part of the upper side edge 55d1 constitutes one example of a first edge part, while the rearward part of the lower side edge 55d2 constitutes one example of a second edge part. The inner plate 55 can be formed with higher strength than the outer plate 56 by using press forming to form indentations, projections and edges the on inner plate 55 to increase rigidity and strength. The reason for this is that the inner plate 55 is used to cause the chain 95 to slip from the sprocket F1 during upshifting, which requires a strong force from the low position to the top position. As shown in Figures 6 and 7, when the inner plate 55 is disposed in the outside top position, the lower side edge 55d2 is disposed to the inside relative to the tips of the teeth of the sprocket F2 in the radial direction.

As shown in Figures 2 to 5, the inner plate 55 is formed in an arc-shape that follows the outer periphery of the sprockets F1 and F2, with the bottom edge of the inner plate 55 being concaved and spaced from the sprockets F1 and F2 to allow crossing with the chain 95. In other words, the inner plate 55 has arc-shape that extends from the rear end toward the front end, which constitutes the second end on the side of withdrawal of the chain 95.

A first protruding part 55a is formed on the rear end of the inner plate 55. The first protruding part 55a is configured and arranged so that the first protruding part 55a protrudes toward the outer plate 56 in a direction slightly lower than the direction in which the chain 95 is disposed. The amount of protrusion of the first protruding part 55a is preferably in the range of one to two millimeters. The first protruding part 55a is disposed on the rear end part where the chain 95 connected by the connecting bolt 57 is commonly disposed in the case of chain dropping. The first protruding part 55a is disposed to facilitate the return of the chain 95 to the sprocket F2 in the case of chain dropping. As shown in Figure 7, the first protruding part 55a is disposed in a position facing the sprocket F2, and the gap with the sprocket F2 is narrower than other parts.

A tapered part 55b is formed on the front upper part of the first protruding part 55a. The tapered part 55b protrudes gradually toward the first protruding part 55a from the part adjacent to the first protruding part 55a. Thus, the tapered part 55b is formed so that the chain 95 moves smoothly toward the first protruding part 55a when chain dropping occurs. The first protruding part 55a and the tapered part 55b, are simultaneously formed by press forming. Furthermore, the inner plate 55 has a chain shifting part 55c that allows the passage of the chain 95 between the front end part and rear end part. Furthermore, a second protruding part 55e is formed on the front end part (on the chain withdrawal side) of the inner plate 55. The second protruding part 55e protrudes slightly compared to the adjacent parts. This second protruding part 55e is formed so as to press the chain 95 securely into the sprocket F2 in the case of upshifting to the sprocket F2.

The outer plate 56 is formed in a circular arc shape so as to be disposed further to the outside in the direction of diameter than the inner plate 55. When the outer plate 56 is disposed in the outside top position shown in Figures 6 and 7, a gap of approximately one to three millimeters is formed between the lower side 56a and the tips of the teeth of the sprocket F2. Accordingly, the front derailleur 97f is set on the seat tube 102a so that the abovementioned gap is formed. A screw fastening part 56b is formed on the rear part of the outer plate 56. The screw fastening part 56b is bent into a C shape and is disposed on the outside surface of the rear part of the inner plate 55 is formed on the rear part of the outer plate 56. This screw fastening part 56b is connected and fastened to the inner plate 55 by a connecting bolt 57.

As shown in Figure 2, when the fixed member 40 is mounted on the seat tube 102a, the inner link 42 is disposed below the fixed member 40, with the ends of the inner link 42 being pivotally connected to the first clamping member 50 of the fixed member 40 and the chain guide 41. Thus, the inner end of the inner link 42 is connected between the pair of inner link supports 50a so as to freely pivot. The chain guide 41 is connected to the outer end of the inner link 42 so as to freely pivot.

The outer link 43 is disposed so as to be parallel with the inner link 42 at a position farther from the fixed member 40 than the inner link 42. The ends of the outer link 43 are connected to the outer link support 50b of the fixed member 40 and the chain guide 41 so as to freely pivot. Thus, the outer link 43 is pivotally connected to the outer link support 50b. The outer link 43 has a cable connecting arm 44 that is integrally formed on the link support part separated from the fixed member 40 and extending toward the seat tube 102a. A cable connecting part 44a is provided at the tip extending from the cable connecting part 44 for bolting the inner cable of a transmission cable.

In the front derailleur 97f of the above configuration, when downshifting from the top shift position to the low shift position, the chain 95 comes into contact with the outer plate 56 of the chain guide 41, derails from the sprocket F2, and is guided to the sprocket F1. The switching operation of the chain 95 in this case is indicated by the solid line in Figure 6. When downshifting, as the chain 95 is guided to the sprocket F1, derailment of the chain 95 starts at the detachment point DR disposed in specific rotational phase with the sprocket F2, and the chain 95 drops to the sprocket F1. In the case of this downshifting, chain dropping may occur in which the chain 95 drops to the inside from the sprocket F1.

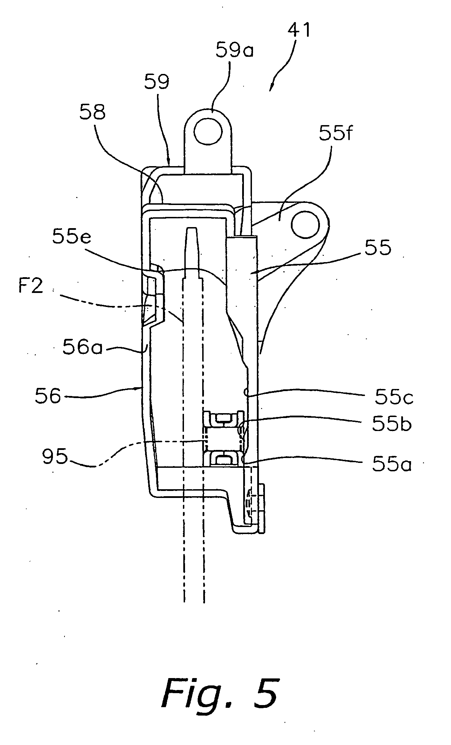

When chain dropping occurs, the chain 95 drops downward along the hanger part 102c of the frame 102 in a state in which the chain 95 is caught on the rear portion of the chain guide 41, as indicated by the two-dot chain line in Figure 7. In this state, when an upshifting operation (speed change from the sprocket F1 to sprocket F2) is performed by the gearshift operating part 110f, the chain guide 41 swings to the outside. When the chain guide 41 swings to the outside, the chain caught on the rear part of the chain guide 41 is pressed toward the sprocket F2 by the first protruding part 55a, as shown in Figure 5. When the chain 95 is pressed, the chain 95 contacts the sprocket F2 and catches on the tooth T1 located in close proximity to the first protruding part 55a, or catches on the tooth T2 above the first protruding part 55a while slipping over the rotating sprocket F2 in a state of contact with the side surface, as shown in Figure 7. As a result, the chain 95 can easily be caused to return to the sprocket F2, as indicated by the solid line in Figure 7.

Here, the first protruding part 55a which protrudes toward the outer plate 56 is disposed on the rear end of the inner plate 55 on the chain entry side where the chain 95 is commonly disposed when chain dropping occurs. Accordingly, when an upshifting operation is performed in the case of chain dropping, the chain 95 is caused to contact the sprocket F2 by the first protruding part 55a, and moves while being clamped against the sprocket F2 so that the chain 95 can easily be caused to return to the sprocket F2.

In the abovementioned embodiment, the present invention was described using a road type two-speed front derailleur with two sprockets as an example. However, the present invention can also be applied to a three-speed front derailleur with three sprockets.

In the abovementioned embodiment, the inner plate 55 and the outer plate 56 were formed as an integral unit. However, the present invention is not limited to this arrangement. The inner plate 55 and the outer plate 56 can also be separate bodies.

In the abovementioned embodiment, the first protruding part 55a was formed by press forming with substantially the same thickness as the other parts. However, this thickness may also be different from the thicknesses of other parts. Furthermore, this first protruding part 55a can also be formed as a separate part from the other parts.

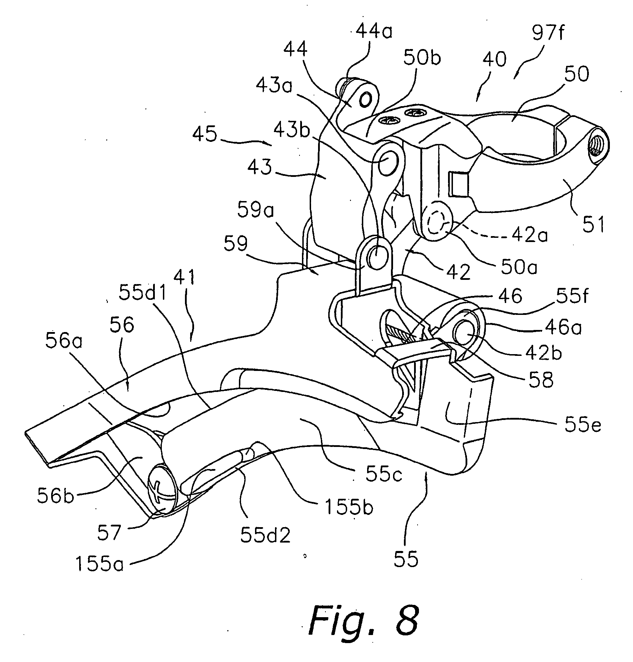

In the abovementioned embodiment, the first protruding part 55a was formed over the entire surface of the rear end of the inner plate 55 constituting the chain entry side. However, the present invention is not limited to this arrangement. It is sufficient if the first protruding part 55a is disposed on at least a portion of the rear end of the inner plate 55. For example, in Figure 8, a first protruding part 155a is disposed on a portion of the rear end of the inner plate 155. In this case, since the lower side edge 55d2 constituting the inner circumferential side of the inner plate 155 is close to the sprocket F2, it is desirable that the first protruding part 155a be disposed on the lower side edge 55d2. Furthermore, a tapered part 155b that gradually protrudes toward the first protruding part 155a from the parts adjacent to the first protruding part 155a is formed on the upper front part of the first protruding part 155a. The amount of protrusion of the first protruding part 155a is preferably in the range of one to two millimeters.

In this case, when chain dropping occurs, the chain 95 is pressed toward the sprocket F2 by an upshifting operation, so that the chain 95 can easily be caused to return to the sprocket F2 in the same manner as in the abovementioned embodiment. Furthermore, since the first protruding part 155a is disposed that much closer to the large-diameter sprocket F2, the chain 95 can be caused to securely contact the sprocket F2 even if the first protruding part 155a is disposed on only a portion of the read end of the inner plate 155.

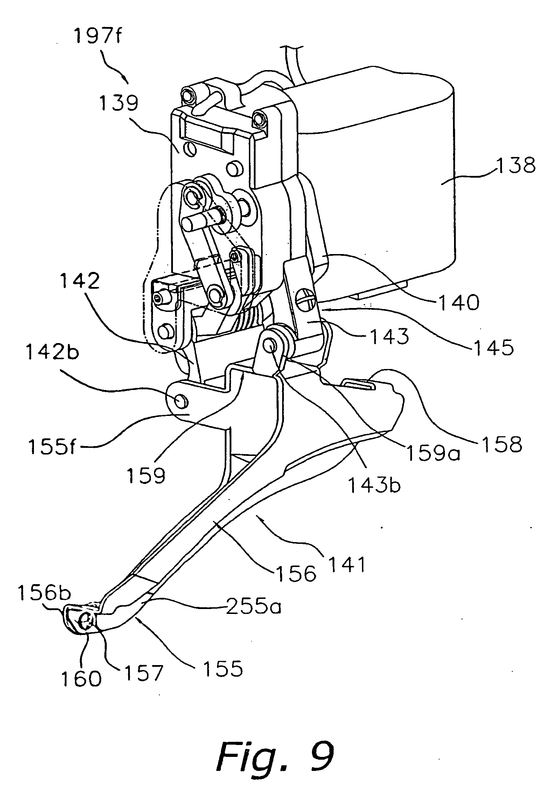

A washer member 160 can be fastened to the connecting part between the inner plate 155 and outer plate 156 by a connecting bolt (one example of a bolt member) 157, as shown in Figures 9 to 11.

In Figure 9, a motorized front derailleur 197f is an electrically driven derailleur that is driven by a motor, and has an electrical driving part 139, a fixed member 140, a chain guide 141, an inner link 142 and an outer link 143. The inner and outer links 142 and 143 form a moving mechanism 145.

The fixed member 140 is fastened to a special fastening fitting (not shown in the figures) which is fastened by welding to the seat tube 102a. The electrical driving part 139 has an internally disposed driving motor and control circuit. A battery box 138 containing a battery, which is used as a power supply for these parts, is connected to the fixed member 140.

The chain guide 141 is the same as in the abovementioned embodiment, and is swingably connected to the lower ends of the inner link 142 and the outer link 143. The chain guide 141 has an inner plate (one example of an inside member) 155, and an outer plate (one example of an outside member) 156 which is disposed on the outside of the inner plate 155 with a gap left between itself and the inner plate 155. The chain 95 can be guided between this inner plate 155 and outer plate 156.

The inner and outer plates 155 and 156 are formed by cutting special thin metal plates to a specified shape by press forming, and then bending these plates in the same manner as in the abovementioned embodiment. Accordingly, both plates 155 and 156 are formed as an integral unit, and are connected by a connecting bolt 157 at one place at the rear end (one example of the first end on the chain entry side). Furthermore, the plates are connected into one body in a state in which the plates are bent into a C shape by a front connecting part 158 and a rear connecting part 159 on the upper part. Two outer link connecting parts 159a are formed in a state in which these parts are bent upward on this rear connecting part 159. The lower part of the outer link 143 is connected to the outer link connecting parts 159a via the link shaft 143b.

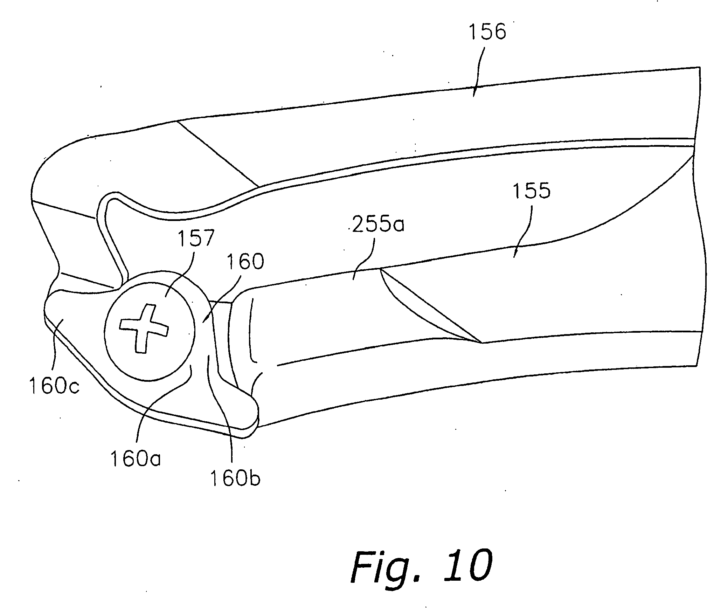

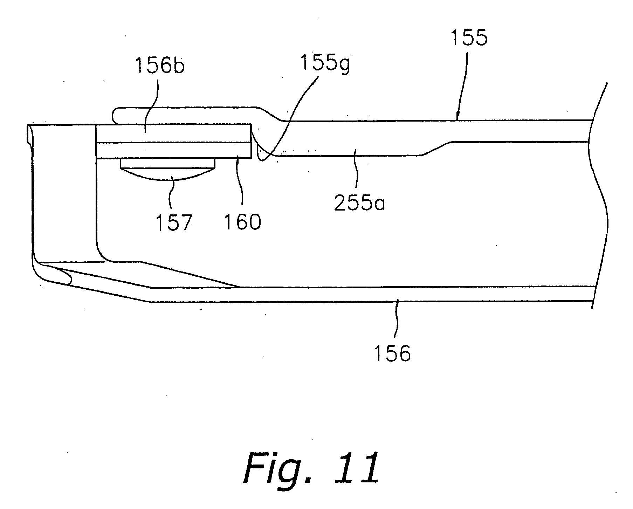

Two inner link connecting parts 155f are disposed on the inner plate 155. The inner link connecting parts 155f are bent toward the back surface. The lower end of the inner link 142 is swingably connected to the inner link connecting pars 155f via the link shaft 142b. As shown in Figures 10 and 11, a first protruding part 255a is formed on the rear end of the inner plate 155. The first protruding part 255a is formed so that this part protrudes toward the outer plate 156 in a direction slightly lower than the direction in which the chain 95 is disposed. The amount of protrusion of the first protruding part 255a is preferably in the range of one to two millimeters. A difference in level 155g is formed in the same manner as in the abovementioned embodiment in the rear end part of the inner plate 155 so that this is disposed on the inside surface of the bent screw fastening part 156b of the outer plate 156. This difference in level 155g is formed regardless of the presence or absence of a first protruding part 255a. However, since a first protruding part 255a is present, the difference in level is larger than in a case in which there is no first protruding part 255a. Accordingly, the washer member 160 is fastened to the inner plate 155 by a connecting bolt (one example of a bolt member) 157 in order to fill in the difference in level 155g.

The washer member 160 is a plate-form member, and has a fastening part 160a that is fastened by a connecting bolt 157 in the central part. This member also has a filling part 160b that is used to fill in the difference in level 155g on the front side, and has an anchoring part 160c used to prevent rotation on the rear side. The thickness of the washer member 160 is set so that the surface is at a height that is close to the amount of protrusion of the first protruding part 255a. However, a certain quantity of indentations and projections may be generated with respect to the first protruding part 255a.

As a result of arranging a washer member 160 in this manner, even if a difference in level is generated with respect to the first protruding part 255a, the chain 95 tends not to catch on the difference in level part. In particular, in cases in which a speed change is performed using an electrically driven derailleur, the force acting on the derailleur during the speed change can be adjusted compared to cases in which a speed change is performed manually. Accordingly, in cases in which a dropped chain 95 is returned as well, the chain 95 is pressed against the sprocket F2 with a fixed forced by the first protruding part 255a. Consequently, when the chain 95 catches on the difference in level 155g, there is a danger that the chain 95 will not return smoothly to the sprocket F2. However, since a washer member 160 is provided so that the chain tends not to catch on the difference in level 155g, even if the chain 95 is pressed by a fixed force, the chain 95 tends to return to the sprocket F2.

In the abovementioned embodiments, the first protruding part 55a, 155a or 255a was formed as an integral unit with the inner plate 55 or 155, but this first protruding part can also be a separate body.

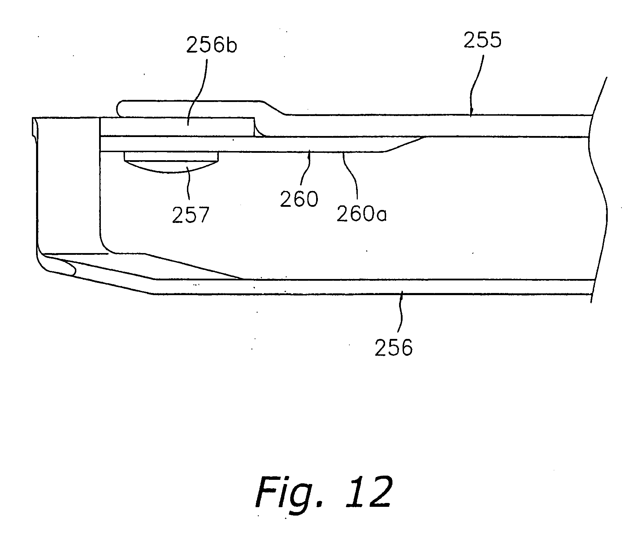

In Figure 12, the outer plate 256 has the same shape as in the abovementioned embodiment, but a first protruding part is not formed on the inner plate 255. Instead, a spacer 260 which has a first protruding part 260a is fastened to the connecting part of the inner plate 255 and outer plate 256 by a connecting bolt (one example of a bolt m ember) 257.

The spacer 260 has a first protruding part 260a on the front end, and the rear end is fastened to the inner plate 255 together with the screw fastening part 256b of the outer plate 256 of the outer plate 256 by the connecting bolt 257.

By thus disposing the first protruding part 260a as a body that is separate from the inner plate 255, a first protruding part can be attached afterward to a derailleur having a conventional structure, and even if the first protruding part becomes worn by contact with the chain, the first protruding part can be replaced.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle front derailleur (97f,) comprising:
a fixed member (40) configured and arranged to be fixedly attached to bicycle;
a chain guide (41, 141) configured to move between a retracted position and an extended position relative to the fixed member (40), the chain guide (41) including an inside member (55, 155) and an outside member (56, 156) defining a chain receiving slot therebetween to guide a chain (95), the inside member (55, 155) has a rear end part with a first protruding part (55a, 155a) disposed on a chain entry side of the chain receiving slot, the first protruding part (55a, 155a) protruding towards the outside member (56, 156);
wherein the inside and outside members (55, 56, 155, 156) are formed as a one-piece member, wherein a bolt member (57, 157) is connecting the inside and outside members (55, 56, 155, 156) at the chain entry side, and a screw fastening part (56b, 156b) is formed on the rear part of the outside member (56, 156) and bent into a C shape to be disposed on the outside surface of the rear end part of the inside member (55, 155), and is connected and fastened to the inside member (55, 155) by the bolt member (57, 157), and wherein a difference in level (155g) is formed in the rear end part of the inside member (155), the rear end part being connected with the inside surface of the screw fastening part (156b) of the outside member (156)and a moving mechanism (45, 145) coupled between the fixed member (40, 140) and the chain guide (41,141) to move the chain guide (41,141) between the retracted position and the extended position **characterized in that**
a washer member (160) is fastened to the inner plate (55, 155) by the bolt member (57, 157) with the washer member (160) being arranged to fill the difference in level.

2. The bicycle front derailleur (97f, 197f) according to claim 1, wherein
the inside member (55) further has a first tapered part (55b) tapering gradually toward the first protruding part (55a) from a chain exit side of the chain receiving slot that is opposite from the chain entry side.

3. The bicycle front derailleur (97f, 197f) according to claim 1 or 2, wherein
the inside member (55) has a chain shifting part (55c) extending from the chain entry side toward the chain exit side to provided for shifting of the chain (95).

4. The bicycle front derailleur (97f, 197f) according to any of the preceding claims, wherein
the inside member (55) has a first edge part (55d1) facing generally towards the chain entry side and a second edge part (55d2) on a chain withdrawal side spaced from the chain entry side toward the chain exit side; and
the first protruding part (55a) is at least partially disposed in an area of the chain entry side that is adjacent the second edge part (55d2).

5. The bicycle front derailleur (97f, 197f) according to any of the preceding claims, wherein
the first protruding part (55a) protrudes toward the outside member (56) in a range of one to two millimeters relative an adjacent part of the inside member (55).

6. The bicycle front derailleur (97f, 197f) according to any of the preceding claims, wherein
the first protruding part (55a) includes a spacer (260) fastened by the bolt member (57).

7. The bicycle front derailleur (97f, 197f) according to any of the preceding claims, wherein
the inside member (55) is a press-formed, metallic plate, with the first protruding part (55a) being a part of the press-formed, metallic plate that constitutes the inside member (55).

## Patentansprüche

1. Vorderer Umwerfer (97f) für Fahrräder, aufweisend:
ein feststehendes Element (40), das konfiguriert und angeordnet ist, um an einem Fahrrad fest angebracht zu werden;
eine Kettenführung (41, 141), die konfiguriert ist, um sich zwischen einer zurückgezogenen Position und einer ausgefahrenen Position relativ zum feststehenden Element (40) zu bewegen, wobei die Kettenführung (41) ein inneres Element (55, 155) und ein äußeres Element (56, 156) beinhaltet, die einen Kettenaufnahmeschlitz dazwischen definieren, um eine Kette (95) zu führen, wobei das innere Element (55, 155) ein rückwärtiges Endteil mit einem ersten vorstehenden Teil (55a, 155a) aufweist, das an einer Ketteneintrittsseite des Kettenaufnahmeschlitzes angeordnet ist, wobei der erste vorstehende Teil (55a, 155a) in Richtung zum äußeren Element (56, 156) vorsteht;
wobei die inneren und äußeren Elemente (55, 56, 155, 156) als einstückiges Element ausgebildet sind, wobei ein Bolzenelement (57, 157) die inneren und äußeren Elemente (55, 56, 155, 156) an der Ketteneintrittsseite verbindet, und ein Schraubenbefestigungsteil (56b, 156b) am rückwärtigen Teil des äußeren Elementes (56, 156) ausgebildet ist und C-förmig gekrümmt ist, um an der äußeren Fläche des rückwärtigen Endteils des inneren Elementes (55, 155) angeordnet zu sein, und mit dem inneren Element (55, 155) mittels des Bolzenelementes (57, 157) verbunden ist und an diesem befestigt ist, und wobei eine Differenz des Niveaus (155g) im rückwärtigen Endteil des inneren Elementes (155) ausgebildet ist, wobei der rückwärtige Endteil mit der inneren Fläche des Schraubenbefestigungsteils (156b) des äußeren Elementes (156) verbunden ist und ein Bewegungsmechanismus (45, 145) zwischen dem feststehenden Element (40, 140) und der Kettenführung (41, 141) verbunden ist, um die Kettenführung (41, 141) zwischen der zurückgezogenen Position und der ausgefahrenen Position zu bewegen, **dadurch gekennzeichnet, dass**
ein Unterlegscheibenelement (160) an der inneren Platte (55, 155) mittels des Bolzenelementes (57, 157) befestigt ist, wobei das Unterlegscheibenelement (160) angeordnet ist, um die Niveaudifferenz aufzufüllen.

2. Vorderer Umwerfer (97f, 197f) für Fahrräder nach Anspruch 1, wobei
das innere Element (55) weiter ein erstes abgeschrägtes Teil (55b) aufweist, das allmählich in Richtung zum ersten vorstehenden Teil (55a) ausgehend von einer Kettenaustrittsseite des Kettenaufnahmeschlitzes zuläuft, die sich gegenüberliegend zur Ketteneintrittsseite befindet.

3. Vorderer Umwerfer (97f, 197f) für Fahrräder nach Anspruch 1 oder 2, wobei
das innere Element (55) einen Kettenschaltteil (55c) aufweist, der sich von der Ketteneintrittsseite in Richtung zur Kettenaustrittsseite erstreckt, und der für ein Schalten der Kette (95) vorgesehen ist.

4. Vorderer Umwerfer (97f, 197f) für Fahrräder nach einem der vorhergehenden Ansprüche, wobei
das innere Element (55) einen ersten Kantenteil (55d1), der im Wesentlichen in Richtung zur Ketteneintrittsseite weist, und einen zweiten Kantenteil (55d2) an einer Kettenrückzugsseite aufweist, die beabstandet von der Ketteneintrittsseite in Richtung zur Kettenaustrittsseite angeordnet ist; und
der erste vorstehende Teil (55a) zumindest teilweise in einem Gebiet der Ketteneintrittsseite angeordnet ist, das sich benachbart zum zweiten Kantenteil (55d2) befindet.

5. Vorderer Umwerfer (97f, 197f) für Fahrräder nach einem der vorhergehenden Ansprüche, wobei
der erste vorstehende Teil (55a) in Richtung zum äußeren Element (56) in einem Bereich von einem oder zwei Millimetern relativ zu einem benachbarten Teil des inneren Elementes (55) vorsteht.

6. Vorderer Umwerfer (97f, 197f) für Fahrräder nach einem der vorhergehenden Ansprüche, wobei
der erste vorstehende Teil (55a) ein Abstandsstück (260) beinhaltet, das mittels des Bolzenelementes (57) befestigt ist.

7. Vorderer Umwerfer (97f, 197f) für Fahrräder nach einem der vorhergehenden Ansprüche, wobei
das innere Element (55) eine durch Pressen geformte Metallplatte ist, wobei der erste vorstehende Teil (55a) ein Teil der durch Pressen geformten Metallplatte ist, der das innere Element (55) bildet.

## Revendications

1. Dérailleur avant (97f) de bicyclette, comprenant :
un élément fixe (40) configuré et agencé pour être fixé de manière fixe à la bicyclette ;
un guide de chaîne (41, 141) configuré pour se déplacer entre une position rétractée et une position étendue par rapport à l'élément fixe (40), le guide de chaîne (41) comprenant un élément intérieur (55, 155) et un élément extérieur (56, 156) définissant une fente de réception de chaîne entre eux pour guider une chaîne (95), l'élément intérieur (55, 155) a une partie d'extrémité arrière avec une première partie en saillie (55a, 155a) disposée sur un côté d'entrée de chaîne de la fente de réception de chaîne, la première partie en saillie (55a, 155a) faisant saillie vers l'élément extérieur (56, 156) ;
dans lequel les éléments intérieur et extérieur (55, 56, 155, 156) sont formés comme un élément d'un seul tenant, dans lequel un élément de boulon (57, 157) raccorde les éléments intérieur et extérieur (55, 56, 155, 156) au niveau du côté d'entrée de chaîne, et un élément de fixation de vis (56b, 156b) est formé sur la partie arrière de l'élément extérieur (56, 156) et plié selon une forme de C pour être disposé sur la surface extérieure de la partie d'extrémité arrière de l'élément intérieur (55, 155) et est raccordé et fixé à l'élément intérieur (55, 155) par l'élément de boulon (57, 157) et dans lequel une différence de niveau (155g) est formée dans la partie d'extrémité arrière de l'élément intérieur (155), la partie d'extrémité arrière étant raccordée avec la surface intérieure de la partie de fixation de vis (156b) de l'élément extérieur (156) et un mécanisme de déplacement (45, 145) couplé entre l'élément fixe (40, 140) et le guide de chaîne (41, 141) pour déplacer le guide de chaîne (41, 141) entre la position rétractée et la position étendue, **caractérisé en ce que** :
un élément de rondelle (160) est fixé sur la plaque interne (55, 155) par l'élément de boulon (57, 157) avec l'élément de rondelle (160) qui est agencé pour compenser la différence de niveau.

2. Dérailleur avant (97f, 197f) de bicyclette selon la revendication 1, dans lequel l'élément intérieur (55) a en outre une première partie progressivement rétrécie (55b) se rétrécissant progressivement vers la première partie en saillie (55a) à partir d'un côté de sortie de chaîne de la fente de réception de chaîne qui est opposé au côté d'entrée de chaîne.

3. Dérailleur avant (97f, 197f) de bicyclette selon la revendication 1 ou 2, dans lequel l'élément intérieur (55) a une partie de changement de vitesse de chaîne (55c) s'étendant à partir du côté d'entrée de chaîne vers le côté de sortie de chaîne pour fournir le changement de vitesse de la chaîne (95).

4. Dérailleur avant (97f, 197f) de bicyclette selon l'une quelconque des revendications précédentes, dans lequel :
l'élément intérieur (55) a une première partie de bord (55d1) généralement orientée vers le côté d'entrée de chaîne et une deuxième partie de bord (55d2) du côté de retrait de chaîne espacé du côté d'entrée de chaîne vers le côté de sortie de chaîne ; et
la première partie en saillie (55a) est au moins partiellement disposée dans une zone du côté d'entrée de chaîne qui est adjacente à la deuxième partie de bord (55d2).

5. Dérailleur avant (97f, 197f) de bicyclette selon l'une quelconque des revendications précédentes, dans lequel :
la première partie en saillie (55a) fait saillie vers l'élément extérieur (56) selon une valeur de l'ordre d'un à deux millimètres par rapport à une partie adjacente de l'élément intérieur (55).

6. Dérailleur avant (97f, 197f) de bicyclette selon l'une quelconque des revendications précédentes, dans lequel :
la première partie en saillie (55a) comprend un dispositif d'espacement (260) fixé par l'élément de boulon (57).

7. Dérailleur avant (97f, 197f) de bicyclette selon l'une quelconque des revendications précédentes, dans lequel :
l'élément intérieur (55) est une plaque métallique formée à la presse, avec la première partie en saillie (55a) qui fait partie de la plaque métallique formée à la presse qui constitue l'élément intérieur (55).
